# EUROPÄISCHE PATENTSCHRIFT

(11) **EP 1 604 138 B1**
(45) Veröffentlichungstag und Bekanntmachung des Hinweises auf die Patenterteilung: **19.03.2008**
(21) Anmeldenummer: 04707527.0
(22) Anmeldetag: 03.02.2004
(51) Int. Cl.: F16K 17/04

(54) **DRUCKENTLASTUNGSVENTIL**
DECOMPRESSION VALVE
SOUPAPE DE DECHARGE

(30) Priorität: 19.03.2003 DE 10312177; 26.11.2003 DE 20318265 U
(43) Veröffentlichungstag der Anmeldung: 14.12.2005
(73) Patentinhaber: Maschinenfabrik Reinhausen GmbH, 93059 Regensburg (DE)
(72) Erfinder: BRILL, Rainer, 63667 Nidda (DE); SCHLEPP, Klaus, 93142 Maxhütte-Birkenhöhe (DE); WEBER, Michael, 93170 Bernhardswald (DE); WITTENZELLNER, Georg, 93083 Obertraubling (DE)
(86) Internationale Anmeldenummer: PCT/EP2004/000946
(87) Internationale Veröffentlichungsnummer: WO 2004/083700

(56) Entgegenhaltungen:
- BE-A- 452 471
- US-A- 5 855 225

## Beschreibung

Die Erfindung betrifft ein Druckentlastungsventil für ölgefüllte Transformatoren und Stufenschalter. Überschreitet auf Grund von Fehlfunktionen oder Störungen der Druck im Trafokessel des Transformators oder im Stufenschalter einen vorbestimmten Grenzwert, so öffnet das während des normalen Betriebes geschlossene Druckentlastungsventil und stellt eine Druckentlastung mit der den Transformator oder den Stufenschalter umgebenden Atmosphäre her.

Ein solches Druckentiastungsventil, das auf eine Öffnung an der Oberseite des Trafokessels montiert wird, ist aus der US 3,914,528 bekannt. Es besteht aus einem kreisförmigen Gehäuseflansch, der auf die beschriebene Öffnung des Trafokessels aufgeschraubt wird. Auf der der Oberseite des Trafokessels zugewandten Unterseite des Gehäuseflansches ist zur öldichten Abdeckung eine Ringdichtung in diesen eingelegt. Oben wird die Öffnung des Gehäuseflansches durch einen federbelasteten Ventildeckel im Normalzustand abgedichtet, auf den noch näher eingegangen wird. Auf dem Gehäuseflansch ist ein runder, nach unten offener, becherförmiger Gehäusedeckel mittels Bolzen und Schrauben montiert. Die obere, annähernd horizontale Seite des Gehäusedeckels weist dabei in ihrem inneren konzentrische Stufen auf. Zwischen dem Gehäusedeckel und dem bereits beschriebenen Ventildeckel sind eine oder mehrere vorgespannte Druckfedern angeordnet, d. h. diese Druckfedern stützen sich mit ihren oberen Federenden an der Innenseite des Gehäusedeckels und mit ihren unteren Federenden an der Oberseite des Ventildeckels ab und drücken diesen damit gegen den Gehäuseflansch, derart, dass dessen Öffnung öldicht verschlossen wird. Dazu ist an der dem Ventildeckel zugewandten Oberseite des Gehäuseflansches noch eine umlaufende Ringdichtung vorgesehen. Überschreitet der Druck im Trafokessel den Ansprechdruck der Federn, hebt sich der Ventildeckel und ermöglicht einen Druckausgleich; nachfolgend wird er durch die Kraft der Federn wieder zurück gegen die Ringdichtung an der Oberseite des Gehäuseflansches gedrückt. Zusätzlich ist es bei diesem bekannten Druckentlastungsventil möglich, an der Oberseite, außerhalb des Gehäusedeckels, optische Indikatoren vorzusehen, die schon aus der Ferne dem Personal signalisieren, ob das Druckentiastungsventil angesprochen hat. Schließlich sind auch elektrische Meldekontakte bzw. Schalter zur Fernüberwachung bzw. -anzeige sowie zur Abschaltung des Transformators außerhalb des Gehäusedeckels vorgesehen.

Ein weiteres, ganz ähnlich aufgebautes Druckentlastungsventil ist aus der US 4,843,187 bekannt. Es betrifft einen besonderen Querschnitt und eine spezielle Befestigung der bereits beschriebenen umlaufenden Ringdichtung zwischen der Oberseite des Gehäuseflansches und der Unterseite des Ventildeckels.

Ein weiteres Druckentiastungsventil ist aus der US 4,676,266 bekannt. Dabei ist der Ventildeckel becherförmig ausgebildet; die nach unten offenen Seitenwände korrespondieren mit einer weiteren Dichtung, die in die umlaufende Stirnseite des Gehäuseflansches eingelegt ist. Diese zusätzliche Dichtung weist einen flachen Querschnitt auf; im geschlossenen Zustand des Druckentlastungsventiles ist sie ausgelenkt - vergleichbar mit einem Scheibenwischergummi - und dichtet den Ventildeckel an seinen Stirnwänden zusätzlich gegen den Gehäuseflansch ab. Im Fehlerfall, wenn sich durch Überdruck im Trafokessel der Ventildeckel hebt, dehnt sich der Druck auf die gesamte Ventildeckeifiäche aus; die Kraft, die auf den Deckel wirkt, vergrößert sich und das Ventil springt besonders schnell, innerhalb weniger Millisekunden, auf.

Alle diese bekannten Druckentiastungsventile weisen jedoch eine Reihe von Nachteilen auf. Besonders gravierend ist, dass im Fehlerfall bei unzulässig hohem Druck im Trafokessei, wenn der Ventildeckel geöffnet ist, das unter hohem Druck stehende Medium unkontrolliert aus dem Druckentiastungsventil herausspritzt. Da dieses abrupt und "ohne Vorwarnung" herausspritzende Medium noch dazu extrem heiß ist, besteht für sich in der Nähe befindliches Personal eine große Verletzungsgefahr, ganz abgesehen von der ganz erheblichen Verschmutzung der Umgebung. Ein weiterer Nachteil besteht bei dem bekannten Druckentiastungsventil darin, dass die Schaltkontakte ungeschützt außerhalb des eigentlichen Gerätes vorgesehen sind, es besteht kein Trittschutz, und sie sind auch nicht gegen UV-Strahlen, Ozon, Regen und andere Einflüsse geschützt. Außerdem sind sie ebenso wie die elektrischen Anschlusskabel im Auslösefall ebenfalls dem heißen Ölschwall ausgesetzt.

Aus der WO 98/54498 ist bereits eine Abdeckhaube für Druckentiastungsventile bekannt, die solchen Ventilen nachträglich quasi "übergestülpt" werden soll, und die eine Auslassöffnung aufweist, die eine definierte Führung und Ableitung des Ölschwalles im Auslösefall gewährleisten soll. Auch diese Lösung kann technisch nicht befriedigen. Zunächst einmal handelt es sich um eine reine Retrofitlösung. Die Befestigung der Abdeckhaube erfolgt an den ohnehin am Druckentiastungsventil vorhandenen senkrechten Bolzen und Muttern, mittels der der Gehäusedeckel am Gehäuseflansch montiert ist, wobei sich dazwischen, wie bereits erläutert, die unter hoher Vorspannung stehenden Federn befinden. Zur Montage der bekannten Abdeckhaube müssen also die Muttern gelöst werden, mit denen der ebenfalls unter Vorspannung stehende Gehäusedeckel befestigt ist. Dabei besteht die Gefahr, dass durch die Federkraft der gesamte Gehäusedeckel nach oben springt und das Montagepersonal verletzt. Nach einer weiteren Variante soll die bekannte Abdeckhaube mittels einer zusätzlichen Flanschverbindung nach Art eines Adapters mit dem Trafokessel verbunden sein. Dies ist eine aufwändige Variante, die nicht nur zusätzliche Bauteile erfordert, sondern auch zusätzliche Abdichtprobleme schafft - die sich nur mit weiteren Dichtungen lösen lassen, was die gesamte Anordnung zusätzlich verkompliziert.

Aus BE 452 471 ist ein Druckentlastungsventil mit einer Abdeckung mit seitlichen Auslassöffnungen bekannt.

Ein vorgespannte Feder ist zwischen der Abdeckung und dem Ventilelement angeordnet.

Dieses Dokument wird als nächstliegender Stand der Tecknik gesehen und korrespondiert mit dem Oberbegriff des Anspruchs 1.

Aufgabe der Erfindung ist es, ein Druckentlastungsventil der eingangs genannten Art anzugeben, das die beschriebenen Nachteile nicht aufweist, insbesondere kompakt aufgebaut ist, eine definierte Ableitung des heißen Ölschwalles im Fehlerfall sowie einen zusätzlichen Schutz der Bauteile und der Umgebung vor Verschmutzung gewährleistet.

Diese Aufgabe wird durch die Erfindung vollständig gelöst.

Beim erfindungsgemäßen Druckentlastungsventil ist eine an sich bekannte Abdeckhaube integraler Bestandteil des Gerätes. D. h. statt einer separaten Abdeckhaube ist ein die einzelnen Bauteile vollständig umschließendes, topfförmiges, oben geschlossenes Gehäuse vorgesehen. Dieses Gehäuse muss nicht mehr wie eine separate Abdeckhaube nach dem Stand der Technik auf komplizierte Weise am eigentlichen Druckentiastungsventil befestigt werden. Es ist insbesondere nicht erforderlich, den unter Federspannung stehenden Gehäusedeckel, bei der Erfindung als Federdeckel bezeichnet, zu lösen. Damit entfällt die beschriebene Unfallgefahr; ebenfalls wird ein mögliches Vergessen des Wiederanziehens oder einseitigen Anziehens des Federdeckels vermieden - der Federdeckel wird werksseitig einmal montiert; die entsprechenden Schrauben brauchen später nicht wieder gelöst zu werden. Bei der erfindungsgemäßen Ausführung ist auch kein Adapter, wie aus dem Stand der Technik bekannt, notwendig; damit können keine zusätzlichen Dichtungsprobleme auftreten. Insgesamt ist mit dem erfindungsgemäßen Druckentlastungsventil ein kompaktes, geschlossenes Gerät mit integriertem, alle Bauteile umschließenden Gehäuse geschaffen, das ohne weiteres direkt auf den Transformatorendeckel montiert werden kann.

In der im Wesentlichen senkrechten, zylinderförmigen Seitenwand des Gehäuses sind Auslassöffnungen vorgesehen, die eine definierte Ableitung des im Fehlerfall austretenden Ölschwalles gestatten. Diese Auslassöffnungen können auf unterschiedlichste Weise dimensioniert werden; durch einen geeigneten Strömungsquerschnitt kann einerseits eine unerwünschte Drosselwirkung vermieden werden, andererseits kann der Ölschwall gesteuert und in seinem Austritt gebrochen werden. Durch die Anordnung zahlreicher kleiner statt einer einzigen großen Auslassöffnung ist es zudem auf einfache Weise möglich sicherzustellen, dass nicht mit einem Finger In das Innere des Gerätes gegriffen werden kann oder Fremdkörper in das Gerät eindringen können. Ebenso ist es möglich, horizontale Entlüftungsschlitze vorzusehen und diese mit von oben abdeckenden Auslasshutzen auszustatten. Durch die Anordnung der Auslassöffnungen In der im Wesentlichen senkrechten Wandung ist auf jeden Fall ein guter Regen- sowie Tropfwasserschutz gegeben. Das topfförmige Gehäuse schützt zudem auch ggf. zusätzlich angebrachte Schaltkontakte. Durch die Anordnung von Kabeldurchführungen am Durchführungsblech gemäß einer besonders vorteilhaften Weiterbildung der Erfindung werden zudem die Kabel vor zu hohen Zugbelastungen geschützt; diese zusätzlichen Kabeldurchführungen nehmen einen Großteil der Zugkräfte am Kabel auf und entlasten somit die Kabelverschraubungen an den elektrischen Schaltkontakten ganz erheblich. Ferner sind die beschriebenen Kabel vor dem heißen Ölschwall geschützt, da das erfindungsgemäße Druckentlastungsventil einen definierten Ölablassbereich hat, der besonders vorteilhaft räumlich gegenüber von den Kabeldurchführungen angeordnet ist. Somit wird verhindert, dass die Kabel vom heißen Ölschwall direkt erfasst und beschädigt werden.

Die Erfindung soll nachfolgend an Hand von Zeichnungen beispielhaft noch näher erläutert werden.

Es zeigen:
- Fig. 1: ein erstes erfindungsgemäßes Druckentlastungsventil im geschlossenen (Ruhe-)Zustand in seitlicher schematischer Schnittdarstellung
- Fig. 2: dieses Druckentlastungsventil im offenen, nach Überdruck ausgelöstem Zustand in derselben Schnittdarstellung, jedoch um 90 Grad horizontal gedreht
- Fig. 3: dieses Druckentlastungsventil von außen in perspektivischer Darstellung
- Fig.4: ein zweites erfindungsgemäßes Druckentlastungsventil im geschlossenen (Ruhe-)Zustand in seitlicher schematischer Schnittdarstellung
- Fig. 5: dieses Druckentlastungsventil im offenen, nach Überdruck ausgelöstem Zustand in derselben Schnittdarstellung, jedoch um 90 Grad horizontal gedreht
- Fig. 6: dieses Druckentlastungsventil von außen In perspektivischer Darstellung
- Fig. 7: eine Dichtung dieses Druckentlastungsventils allein
- Fig. 8: ein vergrößerter Detailquerschnitt dieser Dichtung
- Fig. 9: ein drittes erfindungsgemäßes Druckentlastungsventil, teilweise in seitlicher Schnittdarstellung
- Fig. 10: ein viertes erfindungsgemäßes Druckentlastungsventil, wiederum auszugsweise in seitlicher Schnittdarstellung.

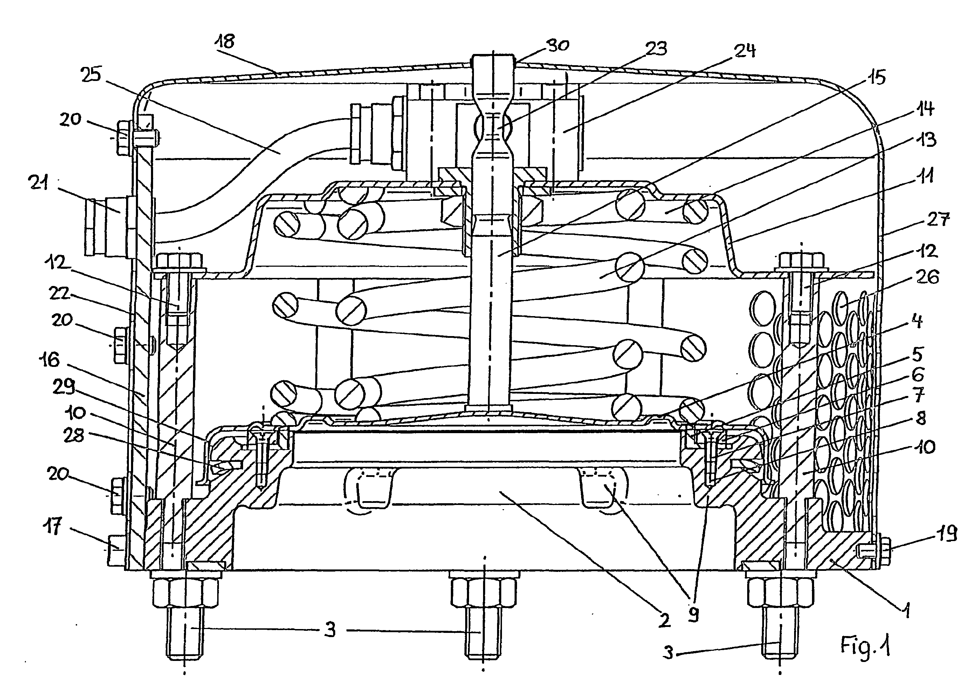

Zunächst soll an Hand von Figur 1 der prinzipielle Aufbau eines ersten erfindungsgemäßen Druckentlastungsventiles beschrieben werden. Es weist einen Gehäuseflansch 1 auf, der vorzugsweise aus Guss gefertigt ist und eine durchgehende Öffnung 2 besitzt. Dieser Gehäuseflansch 1 ist mit Befestigungsschrauben 3, die vorzugsweise kreisförmig angeordnet sind, mit dem nicht dargestellten Transformatorendeckel auf an sich bekannte Weise verschraubt. Oben wird die Öffnung 2 des Gehäuseflansches 1 durch einen Ventildeckel 4 auf bekannte Weise verschlossen. Um ein öldichtes Abdichten zu gewährleisten, ist eine umlaufende Dichtung 5 mit einem L-förmigen Querschnitt vorgesehen, die mittels eines Klemmringes 6 und kreisförmig angeordneter Schrauben 7 am Gehäuseflansch 1 befestigt ist. Dazu sind Gewinde 8 an Verstärkungsrippen 9 des Gehäuseflansches 1 angebracht, in die die Schrauben 7 eingedreht werden, so dass der Klemmring 6 die Dichtung 5 zuverlässig fixiert. Weiterhin sind in den Gehäuseflansch 1 Bolzen 10 mit Innengewinde eingeschraubt, die sich senkrecht nach oben erstrecken. Ein Federdeckel 11, der dem Gehäusedeckel nach dem Stand der Technik entspricht, ist mittels Schrauben 12, die von oben in die Innengewinde der Bolzen 10 eingeschraubt sind, an diesen befestigt. Zwischen Federdeckel 11 und Ventildeckel 4 befinden sich auf an sich bekannte Weise zwei vorgespannte Federn, nämlich eine innere Feder 13 sowie eine äußere Feder 14. Sowohl innere Feder 13 als auch äußere Feder 14 stützen sich mit ihrem jeweils oberen Ende an konzentrischen Absätzen an der Unterseite des Federdeckels 11 ab; mit ihrem jeweils oberen Ende stützen sie sich an der Oberseite des Ventildeckels 4 ab, der ebenfalls eine entsprechende konzentrische Konturierung aufweist. Zentrisch ist am Ventildeckel 4 noch ein Signalstift 15 vorgesehen, der senkrecht nach oben reicht. Seitlich ist ferner am Gehäuseflansch 1 ein senkrechtes Durchführungsblech 16 mittels Befestigungsschrauben 17 befestigt, auf das später noch näher eingegangen wird. Das gesamte Gerät wird von einem topfförmigen Gehäuse 18 umschlossen, das mittels Schrauben 19 am Gehäuseflansch 1 sowie mittels weiterer Schrauben 20 am Durchführungsblech 16 befestigt wird. Am Durchführungsblech 16 sind eine oder mehrere Kabeldurchführungen 21 vorgesehen; damit das Gehäuse 18 montiert werden kann, besitzt es eine seitliche Aussparung 22, derart, dass es mit dieser Aussparung 22 von oben bei der Montage über die Kabeldurchführungen 21 geschoben werden kann. Der Signalstift 15 weist in seinem oberen Bereich im Inneren des Gerätes eine Schaltkontur 23 auf, mit der einer oder mehrere Schalter 24, Rollenschalter oder Grenztaster etwa, betätigt werden kann bzw. können. Von diesen Schaltern 24 führen Kabel 25 durch die Kabeldurchführung 21 nach außen. Auf der den Kabeldurchführungen 21 gegenüberliegenden Seite des Gehäuses 18 sind Auslassöffnungen 26 vorgesehen, die im topfförmigen Seitenbereich 27, der sich senkrecht nach unten erstreckt, angeordnet sind. Im gezeigten Ausführungsbeispiel handelt es sich dabei um eine Vielzahl kleiner Bohrungen, etwa mit einem Durchmesser kleiner oder gleich 12 mm - es sind jedoch, wie weiter oben bereits erläutert, auch zahlreiche andere Formen oder Größen dieser Auslassöffnungen im Rahmen der Erfindung denkbar. Schließlich ist noch eine weitere Dichtung 28, als Dichtlippe ausgebildet, gezeigt, die bereits aus der US 4,676,266 bekannt ist, nach Art eines Scheibenwischergummis auslenkbar ist und mit dem nach unten gebogenen topfförmigen Randbereich 29 des Ventildeckels 4 korrespondiert. Diese zusätzliche Dichtung 28 ist jedoch kein notwendiger Bestandteil des Druckentlastungsventiles, sondern dient lediglich dazu, unter bestimmten Betriebsbedingungen die Öffnungsgeschwindigkeit zu vergrößern sowie ein "Flattern" zu vermeiden. Schließlich ist noch gezeigt, dass der Signalstift 15 in einer Durchführung 30 oben das Gehäuse 18 durchdringt, d. h. nach außen reicht.

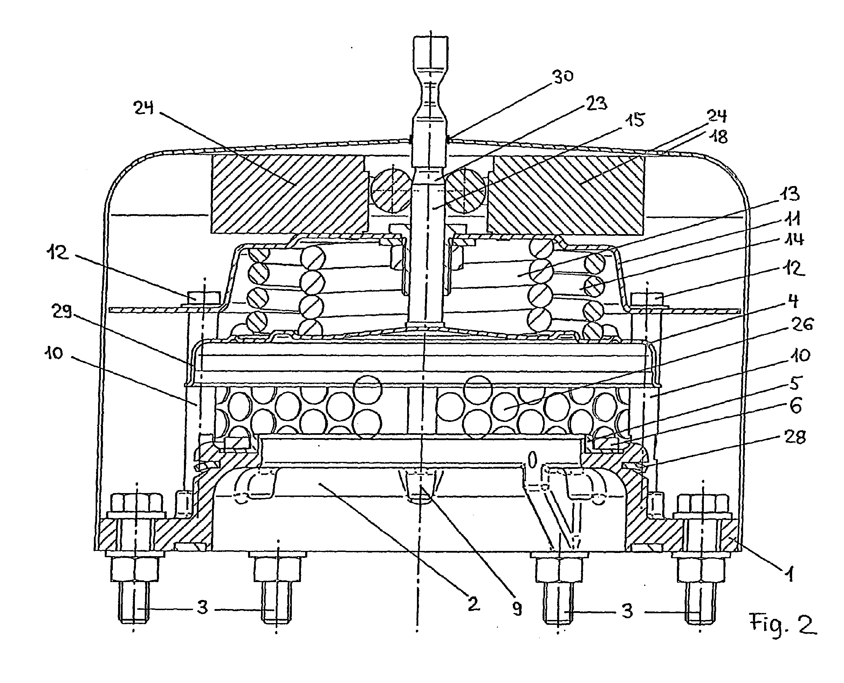

In Figur 2 ist das gleiche Gerät, um 90 Grad horizontal gedreht, noch einmal im geöffneten Zustand gezeigt. Es ist zu sehen, dass durch den Überdruck im - nicht dargestellten - Transformatorenkessel jetzt der Ventildeckel 4 nach oben gegen die Kraft der Federn 13, 14 ausgelenkt ist. In dieser Stellung liegt der Ventildeckel 4 nicht mehr auf der Dichtung 5 auf; die Dichtung 28 befindet sich ebenfalls außer Eingriff mit dem Randbereich 29 des Ventildeckels 4. Das überschüssige, heiße Fluid und Gase gelangen damit ins innere des Druckentlastungsventiles und durch die Auslassöffnungen 26 definiert nach außen. Mit dem Ventildeckel 4 hebt sich auch der Signalstift 15 nach oben. Mit seiner Schaltkontur 23 werden die elektrischen Schalter 24 betätigt. Es ist auch möglich, dass jetzt weiter herausragende Ende des Signalstiftes 15 für die Betätigung bekannter, hier nicht näher dargestellter optischer Anzeigemittel zu verwenden. Durch den Federdeckel 11 wird der Raum, den das Öl ausfüllen kann, nach oben abgeschlossen, der heiße Ölschwall kann somit weder Schalter 24 noch Kabel 25 in Mitleidenschaft ziehen. Sobald der unzulässige Überdruck abgebaut ist, wird durch die Kräfte der Federn 13, 14 der Ventildeckel 4 wieder in seine Ruhelage gedrückt; die Dichtungen 5 und auch 28 dichten den Ventildeckel 4 wieder gegen die Öffnung 2 ab.

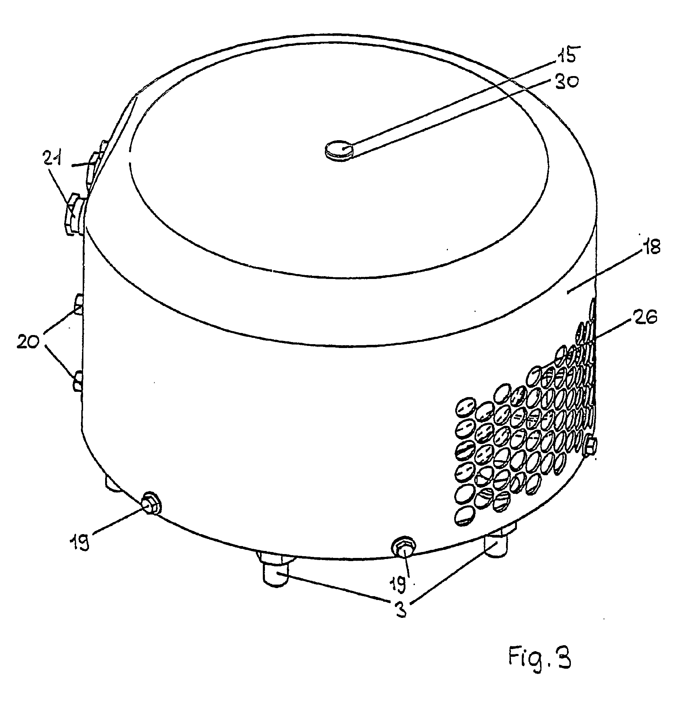

In Figur 3 ist noch einmal das gesamte Gerät in perspektivischer Darstellung gezeigt. Es ist gut zu sehen, dass das Gehäuse 18 alle Bauteile vollständig umschließt. Es ist ferner zu sehen, dass zur Befestigung am Transformatorenkessel keine zusätzliche Adapteranordnung notwendig ist, ebenso wenig, wie irgendwann während der Nutzungsdauer des Gerätes der unter Federspannung stehende Federdeckel gelöst werden muss. Schließlich ist aus dieser Darstellung gut zu sehen, dass keine elektrischen Schalt- oder Verbindungsmittel sich außerhalb des Gehäuses befinden, die etwa beschädigt werden könnten.

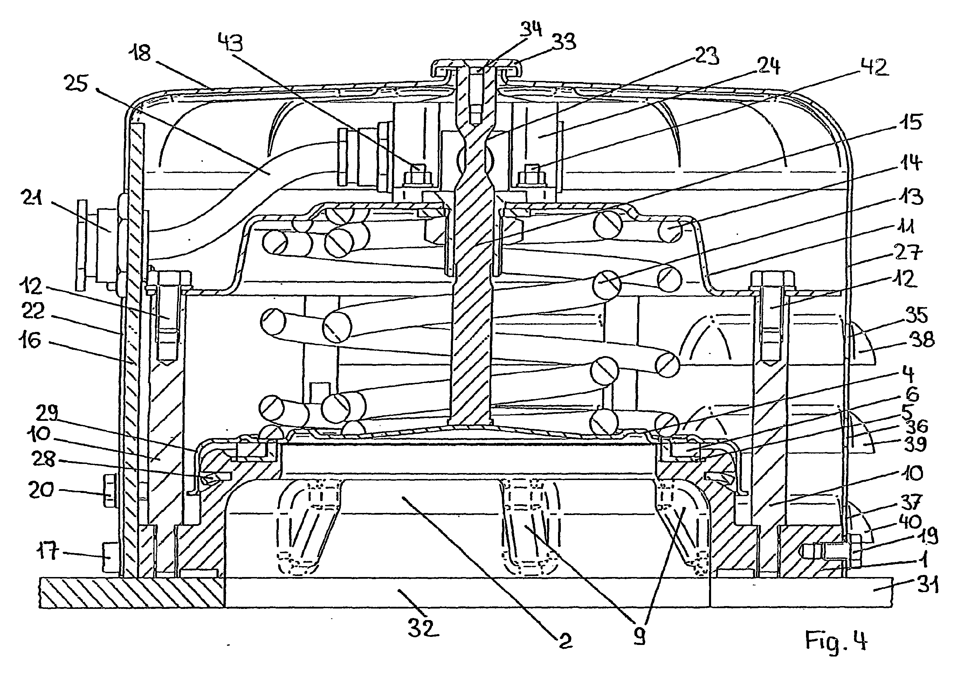

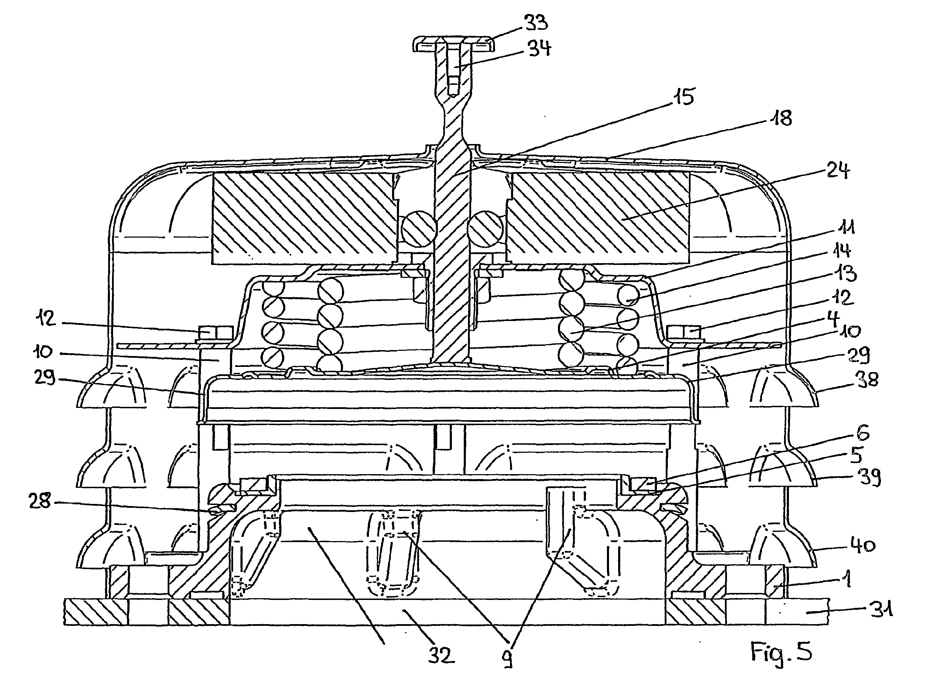

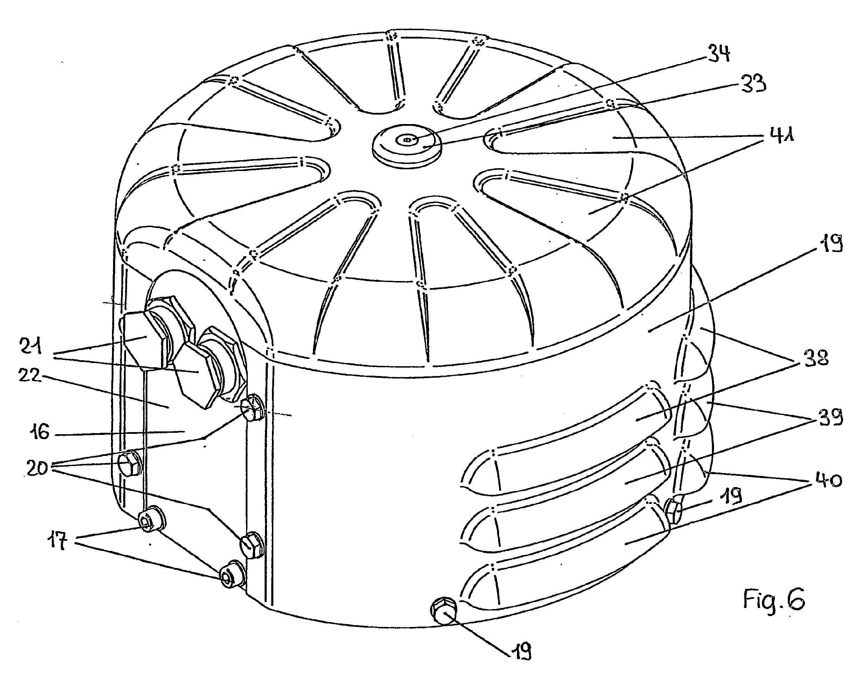

In den Figuren 4 bis 6 ist der prinzipielle Aufbau eines zweiten, abgewandelten erfindungsgemäßen Druckentlastungsventiles gezeigt. Gleiche Bauteile sind mit gleichen Bezugszeichen versehen; der grundsätzliche Aufbau entspricht dem des ersten Ausführungsbeispieles. Abweichend von der in den Figuren 1 bis 3 dargestellten und oben erläuterten ersten Ausführungsform der Erfindung ist hier ein Transformatorendeckel 31 angedeutet, der eine Öffnung 32 aufweist, auf der das Druckentlastungsventil mit seinem Gehäuseflansch 1 und seiner zentrischen Öffnung 2 montiert ist. Bei dieser Ausführungsform weist der Signalstift 15 an seinem oberen freien Ende, das aus dem Gehäuse 18 herausragt, einen Pilz 33 zur Abdeckung auf. Dieser Pilz 33 schützt zuverlässig das gesamte Druckentlastungsventil und auch die Schalter 24 vor eindringendem Regenwasser. Es können auch noch zusätzliche, hier nicht dargestellte, Dichtungen vorgesehen sein. Der Pilz 33 ist beispielsweise von oben mittels einer Befestigungsschraube 34 am Signalstift 15 befestigt. Bei dieser Ausführungsform sind außerdem statt kreisförmiger Auslassöffnungen Entlüftungsschlitze 35, 36, 37 vorgesehen, die sich in unterschiedlichen horizontalen Ebenen radial im topfförmigen Seitenbereich 27 des Gehäuses 18 erstrecken. Von außen ist jeweils eine Auslasshutze 38, 39, 40 angeformt, die einen besonders guten Regenschutz bietet, indem sie die Entlüftungsschlitze 35, 36, 37 zusätzlich von oben in Form eines Daches schützt. Auch bei dieser Ausführungsform ist gewährleistet, dass weder mit Fingern in das Innere gegriffen werden kann noch Fremdkörper dorthin gelangen können. Die Auslasshutzen 38, 39, 40 können selbstverständlich auch als separate Formteile jeweils außen am Gehäuse 18 befestigt werden. Schließlich sind bei dieser Ausführungsform noch Versteifungsrippen 41 im oberen, im Wesentlichen horizontalen Bereich des Gehäuses 18 vorgesehen, die eine besonders hohe mechanische Stabilität dieses Gehäuses 18 gewährleisten.

Die Befestigung der Schalter 24 kann auf besonders vorteilhafte Weise durch in den Federdeckel 11 eingepresste, nach oben gerichtete Gewindebolzen 42, 43, erfolgen, die in der Figur 4 angedeutet sind. Auf diese Weise ist eine einfache auch nachträgliche Befestigung eines oder auch mehrerer Schalter 24 von oben möglich, ohne dass außer dem Gehäuse 18 noch weitere Bauteile entfernt werden müssten. Zweckmäßigerweise werden so viele Gewindebolzen 42, 43 in definierter Lage zueinander vorgesehen, dass die maximal mögliche Zahl von Schaltern 24 montierbar ist. Werden nur weniger oder gar keine Schalter montiert, bleiben die nicht genutzten Gewindebolzen einfach frei. Zwar wäre es auch möglich - dies ist aus dem Stand der Technik bekannt -, die Schalter 24 von oben jeweils mittels eines in den Federdeckel 11 eingeschnittenen Gewindes zu verschrauben. Nachteilig dabei ist jedoch, dass, bedingt durch die geringe Materialdicke des Federdeckels 11, ein Ausreißen des Gewindes auftreten kann; dieser Nachteil wird durch hier vorgeschlagene Befestigung mittels eingepresster Gewindebolzen 42, 43 mit Sicherheit vermieden.

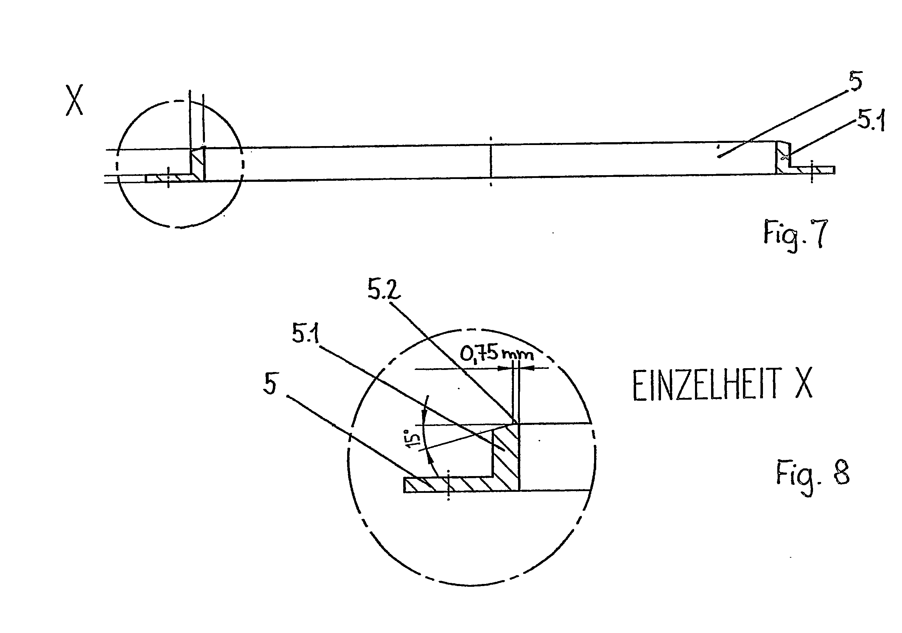

Figur 7 und 8 zeigen eine bereits beschriebene Dichtung 5 mit einem L-förmigen Querschnitt. Der nach oben gegen den Ventildeckel 4 gerichtete Schenkel 5.1 dieser Dichtung 5 dichtet die Öffnung 2 ab. In besonders vorteilhafter Ausgestaltung ist die Dichtfläche 5.2, die im Ruhezustand am Ventildeckel 4 anliegt, abgeschrägt, z. B. um 15°. Dadurch ergibt sich eine Verringerung der wirksamen Dichtfläche und eine Erhöhung des spezifischen Anpressdruckes, besonders wichtig bei kleinen Ansprechdrücken, z. B. 8 PSI. Außerdem wird durch diese Abschrägung die Anpassung der Dichtfläche 5.2 an die unvermeidlichen Unebenheiten des Ventildeckels 4 erleichtert.

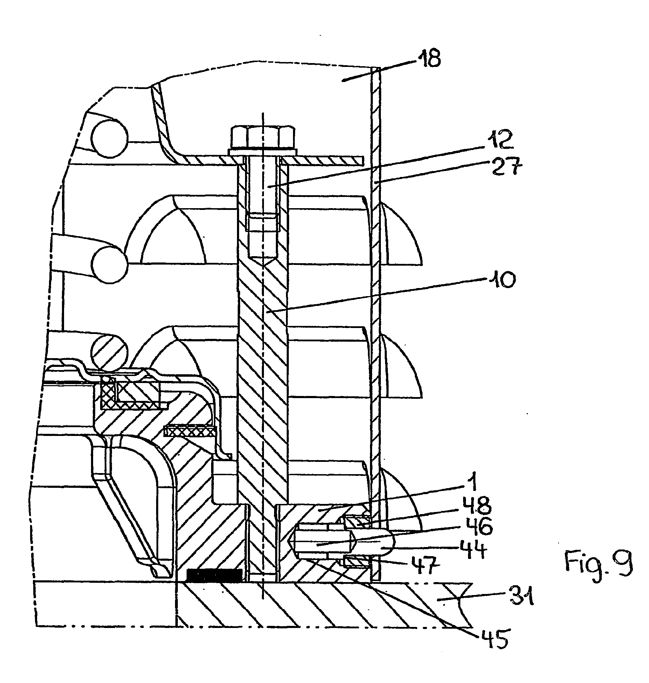

Figur 9 zeigt ein Detail eines weiteren erfindungsgemäßen Druckentlastungsventiles mit einer besonders vorteilhaften Weiterbildung der Befestigung des Gehäuses 18 direkt am Gehäuseflansch 1. Während bei den weiter vorn erläuterten Ausführungsformen die Befestigung durch eine horizontale Verschraubung erfolgt, sind hier Druckknöpfe 44 zur Befestigung vorgesehen, die In Bohrungen 45 des Gehäuses 1, mit ihrem freien Ende nach außen federnd und mit entsprechenden Öffnungen Im topfförmigen Seitenbereich 27 des Gehäuses 18 korrespondierend, angeordnet sind. Um diese federnde Wirkung der Druckknöpfe 44 zu erreichen, weisen diese im Inneren jeweils eine Feder 46 auf, die sich gegen das innere Ende des Druckknopfes 44 einerseits sowie die Stirnfläche der Bohrung 45 andererseits abstützt. Zur Arretierung weist jeder Druckknopf 44 einen radialen Absatz 47 an seiner zylindrischen Außenkontur auf, der wiederum sich gegen eine In den Gehäuseflansch 1 eingeschraubte Arretierungshülse 48 abstützt. Die nach außen gerichtete Kontur des Druckknopfes 44 ist ballig gestaltet, um ein Darübergleiten des Seitenbereiches 27 des Gehäuses 18 zu erleichtern. Dieses ballige Ende des Druckknopfes 44 ragt im montierten Zustand des Gehäuses 18 durch die korrespondierenden Öffnungen nach außen; zur Demontage kann es gegen die Kraft der Feder 46 jeweils nach innen gedrückt und das Gehäuse 18 nach oben entfernt werden. Diese Ausführungsform gestattet ein leichtes und einfaches Montieren bzw. Demontieren des Gehäuses 18 ohne besondere Werkzeuge und eine dennoch zuverlässige Befestigung dieses Gehäuses 18 direkt am Gehäuseflansch 1.

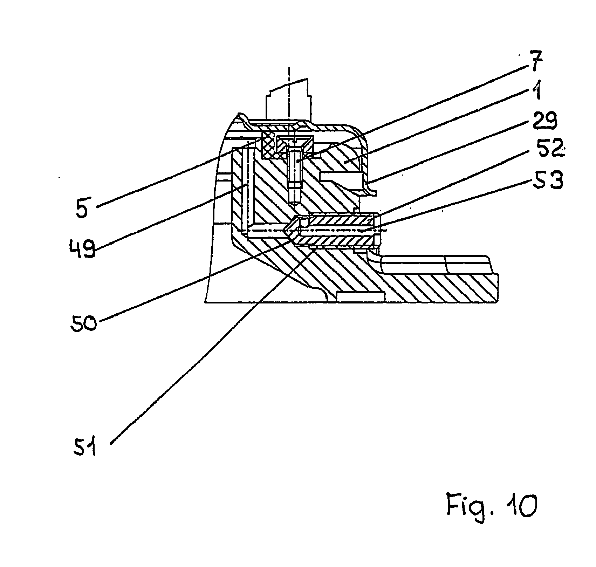

in Figur 10 ist schließlich ein weiteres Detail eines besonders vorteilhaft weiter entwickelten erfindungsgemäßen Druckentlastungsventiles mit einer Möglichkeit zur Entlüftung gezeigt. Beim horizontalen Einbau des Druckentlastungsventiles kann es vorkommen, dass sich im Inneren Gas sammelt, weswegen eine separate Möglichkeit zur Entlüftung bei bestimmten Ausführungen sinnvoll sein kann. Hierzu ist eine Entlüftungsbohrung 49 vorgesehen, die durch den Gehäuseflansch 1 hindurch zu einem Dichtungskonus 50 am Grund einer waagerechten, nach außen führenden Gewindebohrung 51 führt. In diese Gewindebohrung 51 ist von außen eine Entlüftungsschraube 52 eingeschraubt, die an ihrem unteren Ende ebenfalls einen Dichtungskonus aufweist. Der Dichtungskonus 50 der Gewindebohrung 51 als auch der Dichtungskonus der Entlüftungsschraube 52 sind in ihrer Relation zueinander derart bemessen, dass beim Einschrauben und Festziehen der Entlüftungsschraube 52 eine sichere Abdichtung der Entlüftungsbohrung 49 erfolgt, ohne dass der nach dem Stand der Technik erforderliche Dichtungsring notwendig wäre. Besonders vorteilhaft ist die Ausführung der Entlüftungsschraube 52 als hohle Ausführung mit einer zentrischen Entlüftungsbohrung 53, die im eingeschraubten, d. h. abgedichteten Zustand der Entlüftungsschraube 52 verschlossen ist. Durch diese Bauweise muss zur Entlüftung des Druckentlastungsventiles die Entlüftungsschraube 52 nicht vollständig herausgeschraubt, sondern nur etwas gelockert und nach erfolgreicher Entlüftung wieder festgeschraubt werden.

## Patentansprüche

1. Druckentlastungsventil für ölgefüllte Transformatoren und Stufenschalter mit einer Abdeckung, wobei ein Gehäuseflansch (1) mit einer durchgehenden Öffnung (2) vorgesehen ist, die durch einen federbelasteten Ventildeckel (4) und mindestens eine Dichtung (5) im Ruhezustand abgedichtet ist,
wobei ein feststehender Federdeckel (11) oberhalb des Ventildeckels (4) angeordnet ist,
wobei mindestens eine vorgespannte Feder (13, 14) derart zwischen Federdeckel (11) und Ventildeckel (4) angeordnet ist, dass sie sich mit ihrem oberen Ende an der unteren Seite des Federdeckels (11) und mit ihrem unteren Ende an der oberen Seite des Ventildeckels (4) abstützt,
wobei die Abdeckung als topfförmiges, das gesamte Druckentlastungsventil umschließendes Gehäuse (18) ausgebildet ist, das mindestens eine Auslassöffnung (26) aufweist und wobei das Gehäuse (18) direkt am Gehäuseflansch (1) befestigt ist,
**dadurch gekennzeichnet,**
**dass** das Gehäuse (18) separat montierbar ausgebildet ist,
**dass** das Gehäuse (18) eine seitliche Aussparung (22) besitzt,
**dass** seitlich am Gehäuseflansch (1) ein senkrecht nach oben reichendes Durchführungsblech (16) vorgesehen ist, das mindestens eine Kabeldurchführung (21) aufweist und die seitliche Aussparung (22) ausfüllt
und **dass** das Gehäuse (18) zusätzlich mit dem Durchführungsblech (16) verschraubt ist.

2. Druckentlastungsventil nach Anspruch 1,
**dadurch gekennzeichnet,**
**dass** das Gehäuse (18) durch mindestens einen im Gehäuseflansch (1) nach außen federnd angeordneten Druckknopf (44), der jeweils mit einer Öffnung im topfförmigen Seitenbereich (27) des Gehäuses (18) korrespondiert, befestigt ist.

3. Druckentlastungsventil nach einem der Ansprüche 1 bis 2,
**dadurch gekennzeichnet,**
**dass** im Gehäuseflansch (1) eine diesen durchdringende Entlüftungsbohrung (49) vorgesehen ist, die mit einer horizontalen Gewindebohrung (51) in Verbindung steht,
wobei der Grund der Gewindebohrung (51) einen Dichtungskonus (50) aufweist
und wobei in die Gewindebohrung (51) eine Entlüftungsschraube (52) einschraubbar ist, die an ihrem inneren Ende einen weiteren Dichtungskonus aufweist, der mit dem Dichtungskonus (50) der Gewindebohrung (51) korrespondiert.

4. Druckentlastungsventil nach einem der Ansprüche 1 bis 3,
**dadurch gekennzeichnet,**
**dass** mindestens ein Entlüftungsschlitz (35, 36, 37) als Auslassöffnung vorgesehen und jeweils durch eine außen angeordnete Auslasshutze (38, 39, 40), die unten offen ist, abgeschlossen ist.

5. Druckentlastungsventil nach einem der Ansprüche 1 bis 4,
**dadurch gekennzeichnet,**
**dass** innerhalb des Gehäuses (18) mindestens ein an sich bekannter elektrischer Schalter (24) vorgesehen ist, der durch die Auslenkung des Ventildeckels (4) über einen Signalstift (15) betätigbar ist
und **dass** die Kabel (25) dieses mindestens einen Schalters (24) durch die Kabeldurchführungen (21) nach außen geführt sind.

6. Druckentlastungsventil nach Anspruch 5,
**dadurch gekennzeichnet,**
**dass** die Befestigung des mindestens einen Schalters (23) durch in den Federdeckel (11) eingepresste, nach oben reichende Gewindebolzen (42, 43) erfolgt.

7. Druckentlastungsventil nach einem der Ansprüche 5 oder 6,
**dadurch gekennzeichnet,**
**dass** am oberen, aus dem Gehäuse (18) herausragenden Ende des Signalstiftes (15) an diesem ein Pilz (33) zur Abdeckung angeordnet ist.

8. Druckentlastungsventil nach einem der Ansprüche 5 bis 7,
**dadurch gekennzeichnet,**
**dass** der Bereich, in dem sich der mindestens eine elektrische Schalter (24) sowie die Kabel (25) befinden, einen separaten, geschützten Raum bildet, der durch den Federdeckel (11) abgetrennt ist.

9. Druckentlastungsventil nach einem der Ansprüche 1 bis 8,
**dadurch gekennzeichnet,**
**dass** die mindestens eine Auslassöffnung (26) derart ausgebildet ist, dass sie sich in die Kontur des topfförmigen Seitenbereiches (27) des Gehäuses (18) einfügt.

## Claims

1. Pressure relief valve for oil-filled transformers and tap changers with a covering, wherein a housing flange (1) with a continuous opening (2), which in the rest state is sealed off by a spring-loaded valve cover (4) and at least one seal (5), is provided, wherein a stationary spring cover (11) is arranged above the valve cover (4), wherein at least one biased spring (13, 14) is arranged between spring cover (11) and valve cover (4) in such a manner that it is supported by its upper end at the lower side of the spring cover (11) and by its lower end at the upper side of the valve cover (4), wherein the covering is constructed as a pot-shaped housing (18) which encloses the entire pressure relief valve and which has at least one outlet opening (26) and wherein the housing (18) is fastened directly to the housing flange (1), **characterised in that** the housing (18) is constructed to be separately mountable, that the housing (18) has a lateral cut-out (22), that a vertically upwardly extending duct plate (16) having at least one cable duct (21) and filling out the lateral cut-out (22) is provided laterally at the housing flange (1) and that the housing (18) is additionally screw-connected with the duct plate (16).

2. Pressure relief valve according to claim 1, **characterised in that** the housing (18) is fastened by at least one press knob (44) which is arranged in the housing flange (1) to be resiliently urged outwardly and which corresponds with a respective opening in the pot-shaped side region (27) of the housing (18).

3. Pressure relief valve according to one of claims 1 and 2, **characterised in that** a ventilation bore (49) is provided in the housing flange (1) to penetrate this and is connected with a horizontal threaded bore (51), wherein the base of the threaded bore (51) has a sealing cone (50) and wherein a ventilation screw (52) can be screwed into the threaded bore (51) and has at the inner end thereof a further sealing cone which corresponds with the sealing cone (50) of the threaded bore (51).

4. Pressure relief valve according to any one of claims 1 to 3, **characterised in that** at least one ventilation slot (35, 36, 37) is provided as outlet opening and is closed off by a respective outwardly arranged outlet scoop (38, 39, 40), which is downwardly open.

5. Pressure relief valve according to any one of claims 1 to 4, **characterised in that** an electrical switch (24) known per se is provided within the housing (18) and is actuable by the deflection of the valve cover (4) via a signal pin (15) and that the cable (25) of this at least one switch (24) is led outwardly through the cable passages (21).

6. Pressure relief valve according to claim 5, **characterised in that** the fastening of the at least one switch (23) is effected by upwardly extending threaded pins (42, 43) pressed into the spring cover (11).

7. Pressure relief valve according to one of claims 5 and 6, **characterised in that** a mushroom (33) for covering is arranged at the signal pin (15) at the upper end thereof projecting out of the housing (18).

8. Pressure relief valve according to any one of claims 5 to 7, **characterised in that** the region in which the at least one electrical switch (24) and the cable (25) are disposed forms a separate, protected space separated off by the spring cover (11).

9. Pressure relief valve according to any one of claims 1 to 8, **characterised in that** the at least one outlet opening (26) is formed in such a manner that it fits into the contour of the pot-shaped side region (27) of the housing (18).

## Revendications

1. Soupape de détente pour des transformateurs et des changeurs de prise en charge remplis d'huile, comportant un capot,
une bride de boîtier (1) étant munie d'un orifice (2) fermé de manière étanche par un couvercle de soupape (14) chargé par ressort et au moins un joint (5), en position de repos,
un couvercle à ressort (11), fixé, installé au-dessus du couvercle de soupape (4),
au moins un ressort précontraint (13, 14) est installé entre le couvercle à ressort (11) et le couvercle de soupape (4) pour s'appuyer par son extrémité supérieure contre la face inférieure du couvercle à ressort (11) et par son autre extrémité contre le côté supérieur du couvercle de soupape (4),
le capot étant réalisé sous une forme de pot entourant l'ensemble du boîtier (18) de la soupape de détente, et ce capot a au moins un orifice de sortie (26) et le boîtier (18) est fixé directement à la bride de boîtier (1),
**caractérisée en ce que**
- le boîtier (18) est réalisé de façon à se monter séparément,
- le boîtier (18) a un dégagement latéral (22),
- latéralement sur la bride de boîtier (1), il est prévu une tôle de passage (16) verticale vers le haut comportant au moins un passage de câble (21) et remplissant le dégagement latéral (22) et
- l'ensemble du boîtier (18) est en outre vissé à la tôle de passage (16).

2. Soupape de détente selon la revendication 1,
**caractérisée en ce que**
le boîtier (18) est fixé par au moins un bouton pression (44) élastique vers l'extérieur, porté par la bride (1) du boîtier et fixé dans un orifice de la zone latérale (27) en forme de pot, du boîtier (18).

3. Soupape de détente selon l'une des revendications 1 à 2,
**caractérisée en ce que**
la bride de boîtier (1) comporte un perçage de ventilation (49) qui le traverse et communique avec un taraudage horizontal (51),
le fond du taraudage (51) a un cône d'étanchéité (50) et
le taraudage (51) reçoit une vis de purge (52) dont l'extrémité intérieure a un autre cône d'étanchéité correspondant au cône d'étanchéité (50) du taraudage (51).

4. Soupape de détente selon l'une des revendications 1 à 3,
**caractérisée par**
au moins une fente de ventilation (35, 36, 37) comme orifice de sortie et celle-ci est fermée chaque fois par une protection de sortie (38, 39, 40) installée à l'extérieur et dont la partie inférieure est ouverte.

5. Soupape de détente selon l'une des revendications 1 à 4,
**caractérisée en ce que**
dans le boîtier (18) il y a au moins un commutateur électrique (24) connu en soi, actionné par le débattement du couvercle de soupape (4) par l'intermédiaire d'une broche de signalisation (15) et
le câble (25) au moins de ce commutateur (24) sort à travers les passages de câble (21).

6. Soupape de détente selon la revendication 5,
**caractérisée en ce que**
la fixation au moins d'un commutateur (24) se fait à l'aide de vis (42, 43) pressés dans le couvercle à ressort (11) et dirigées vers le haut.

7. Soupape de détente selon l'une des revendications 5 ou 6,
**caractérisée en ce que**
l'extrémité supérieure de la broche de signal (15) qui dépasse du boîtier (18) comporte un couvercle en forme de champignon (33).

8. Soupape de détente selon l'une des revendications 5 à 7,
**caractérisée en ce que**
la zone dans laquelle se trouvent au moins un commutateur électrique (24) et le câble (25) sont séparées par le couvercle à ressort (11) qui forme un espace séparé, protégé.

9. Soupape de détente selon l'une des revendications 1 à 8,
**caractérisée par**
au moins un orifice de sortie (26) réalisé pour s'insérer dans le contour de la zone latérale (27) en forme de pot du boîtier (18).
